# EUROPEAN PATENT APPLICATION

(11) **EP 1 619 768 A1**
(43) Date of publication of application: **25.01.2006**
(21) Application number: 05106806.2
(22) Date of filing: 25.07.2005
(51) Int. Cl.: H02J 3/01

(54) **Filter with virtual shunt nodes**

(30) Priority: 23.07.2004 US 590336
(71) Applicant: SCHAFFNER EMV AG, 4542 Luterbach (CH)
(72) Inventor: Häberle, Norbert, 4514, Lommiswil (CH); Kull, Peter Arthur, Rüttenen, 4522 (CH); Tucker, Andrew Cecil, 3550, Bendigo VIC (AU)
(74) Representative: P&TS Patents & Technology Surveys SA

(57) **Abstract**

EMCfilter, for connection between a supply network and a electric-operated appliance to reduce conduction noise between said supply network and said appliance, comprising virtual shunt nodes inductively coupled to the power line. Thisdisposition allows the realization of multi-stage filters without several electrical tapsto the power line. In thisway a strong attenuation is coupled to a compact and reliable construction.

## Description

### Feld of the invention

Thispatent application relates to electrical filters for filtering an unwanted noise component from an electrical or electronic circuit or line and more particularly, but not exclusively, to electromagnetic compatibility filters for mains lines or distribution linesat mainsfrequency.

### Description of related art

Electromagnetic compatibility (EMC) isan increasingly critical factor in the electric and electronic industry nowadays. A large number of electric circuits and appliances exist, which are liable to generate unwanted electrical noise, or to suffer from noise generated by other circuitsor appliances.

The conducted noises and disturbances are generally dealt with by inserting a low-pass LC filter on the mains supply line of the noise-generating devices or of the noise-sensitive devices. Such filters attenuate the unwanted frequency componentsto a harmless level. Many filter topologies, including the classic " L, " T" and " pi" filter topologies, can be employed.

European Patent application EP1069673 shows an example of a three-phase noise suppression filter comprising passive elements.

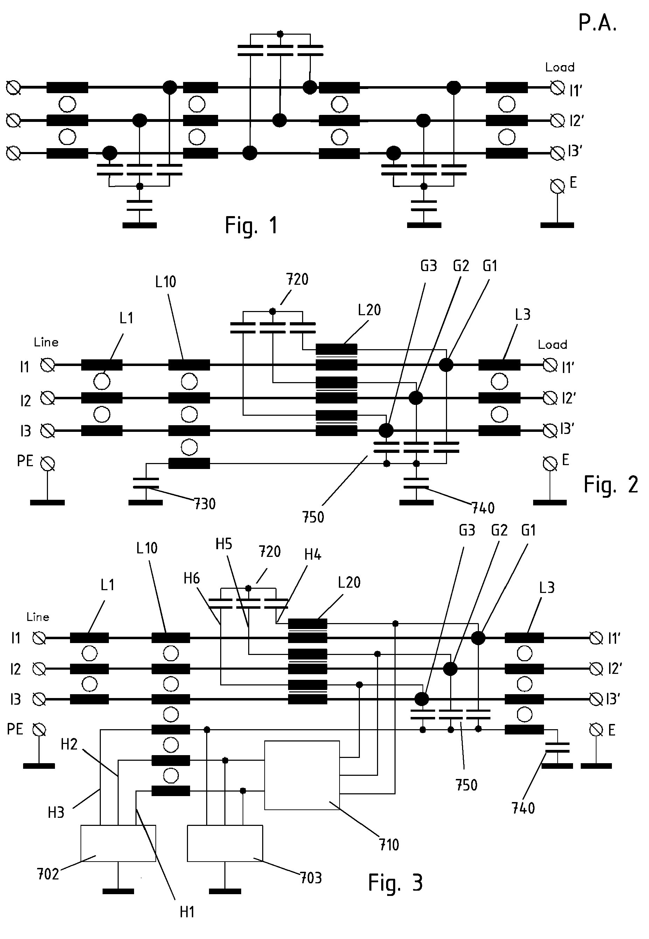

In certain casesa strong noise rejection is required, for example if the filter is used to suppress the noise generated from a very noisy appliance like an inverter-driven motor with long electrical cables. A known way to obtain a stronger noise suppression and a steeper attenuation above the cut-off frequency isthe use of multi-stage low-passfilters, for example cascading two or more LC cells. An example of such filters comprising capacitive shunts for the suppression of common-mode and of differential-mode componentsis reproduced schematically in figure 1.

A shortcoming of multi-stage filtersisthat each stage correspondsto an independent electrical node in each the phase conductors l1, l2 and l3. The connections of these nodes with the shunting elements are obtained by cutting and splicing the mainsconductors, or by interposition of appropriate connectors. These operationsincrease the manufacturing steps, and this the cost of the complete filter and may reduce the filter reliability, in particular for the high current ratings.

In addition to that, each stage in the filter of figure 1 requiresan independent star point provided by a bank of "X" capacitorswhich increase the bulk and the leakage current of the filter.

It is also known to employ active elementsin noise suppression filters, for example asin European patent EP0995266. The use of active elements allows the use of smaller inductances and capacitors, thereby providing more compact filters. The existing active filters, however, remain less reliable than their traditional passive homologues, can fail due to overvoltage or overtemperature breakdown, or may exhibit instability and oscillations. In addition to that, active multi-stage filters have the same limitations of passive filters as described above.

The same limitation isalso present in some single-stage filter. For example a symmetric pi LC filter requirestwo shunt capacitors, one on the line side and one on the device side, on either side of the central inductance. In thiscase also two shunt nodes must be physically accessed on the supply line.

It isan aim of the present invention to provide an EMC filter which is more compact and reliable than the known devices.

It isa further aim of the present invention to provide an EMC filter combining a high attenuation and a low leakage current.

It is also an aim of the present invention to provide an EMC filter with a production cost lower than the known devices.

### Brief summary of the invention

These aims are attained by the device which isthe subject of the appended independent claims, optional and additional useful features being introduced in the dependent claims.

### Brief Description of the Drawings

Figure 1 shows a known type of multi-stage passive EMC filter for a power three-phase line.
Figure 2 shows a multi-stage passive EMC filter according to the invention having a response equivalent to that of filter of figure 1.
Figure 3 shows, in bloc diagrammatic form, an EMC active filter according to an aspect of the invention.
Figure 4 shows an active shunt module of the filter of figure 3.
Figure 5 shows, in bloc diagrammatic form, a modular EMCactive filter according to an aspect of the invention.
Figure 6 displays, in diagrammatic form, a choke module of the filter of figure 5.
Figure 7 displays, in diagrammatic form, a capacitor module and a power supply module of the filter of figure 5.
Figure 8 displays, in diagrammatic form, an amplifier module of the filter of figure 5.
Figure 9 displays an example of three-stage filter according to the invention.

### Detailed Description of the Invention

The filter of the invention may advantageously be employed as EMC suppressor at the input or output of frequency converters, asa network filter, or for any other device connected to a power line.

The illustrated embodiment shows a 3-phase filter circuit. Active monophase filtersincluding a frequency divider and a rectifier according to the invention may also be built.

The filter of the invention may also be employed on DC power lines, for example after the power supply in an electronic appliance, or in automotive applications.

According to another aspect of the invention, represented in figure 3 the filter comprises a first and a second inductive elements L1, L3, placed in seriesalong the power lines l1, l2, l3, l1', l2', l3'. In addition to that, the filter of the invention also comprises additional inductive elements, L10, L20, whose function isto inductively couple the power lines and the shunt circuit, constituted by the power supply 710, by the active modules702 and 703, which may be identical, and by the capacitor bank 720. To thispurpose the inductive elements L10 and L20 have secondary windingsinductively linked to the power lines.

To simplify the realization, the turn ratio of L10 and L20 can be 1:1, which meansthat the emf voltage of the secondary windings equals that of the primary windings. The invention however is not limited to this particular turn ratio.

In the example of figure 3 the inductive element L10 hasa common magneticcircuit to which all the power lines and secondary winding are coupled and is arranged for maximal transfer of a common mode signal from the power linesto the shunt active modules702 and 703.

At the same time inductive element L20 hasa separate magnetic circuit for each power line and isarranged to provide a shunt path for differential mode signals towards the capacitor bank 720. Other disposition are however possible and comprised in the scope of the present invention.

Inductive elements L1, L3, L10 and L20 may be realized by means of magnetic cores, for example made of ferrite, permalloy, sintered metal or laminated steel, according to a variety of shapes and dispositions available in the art. In a particularly advantageous realization the inductive devices are obtained by passing the power cables into magnetic beads.

The filter represented in figure 3 isa two-stage low passfilter with active shunt elements constituted by the amplifiers702 and 703. In fact connecting the second amplifier 702 behind the inductive device L10 is equivalent to connecting it between L1 and L10 via another bank of 'X' capacitors like in figure 1, because the voltage drop on the secondary windingsof L10 isequal or proportional to that present in the power conductors l1, l2, l3 when traversing L10. The second shunt module 702 thusseesthe same noise that it would experience if connected between L1 and L10 (with a multiplicative factor to the value of L10 in the case of a turn ratio different from unity).

In the same way connecting the capacitors 720 at the secondary windingsof the inductive device L20 isthe same, in term of filter response, than placing the capacitors bank 720 between L10 and L20.

The inductive device L10 create virtual shunt nodes H1, H2, H3, which are electrically equivalent to the section of the phase conductors l1, 12, 13, respectively, between the chokes L1 and L10. The inductive device L20 creates virtual shunt nodes H4, H5, H6, which are electrically equivalent to the section of the phase conductors l1, l2, l3, respectively, between the chokes L20 and L10.

By'virtual shunt nodes' are intended, in this application, nodesof an electric network of a power filter, which are equivalent, for the purpose of connecting shunt elements, to a node of the power line to which they are inductively coupled.

However, the filter of the invention illustrated on figure 3 requiresonly one galvanic connection point G1, G2, G3 for each phase of the power cable, and only one bank of "X" capacitors 750 for the coupling of the common mode filter stagesprovided by amplifiers702 and 703. This allows for a simpler and more reliable realization, particularly in the case of multi-stage filters, like the filter presented in thisexample.

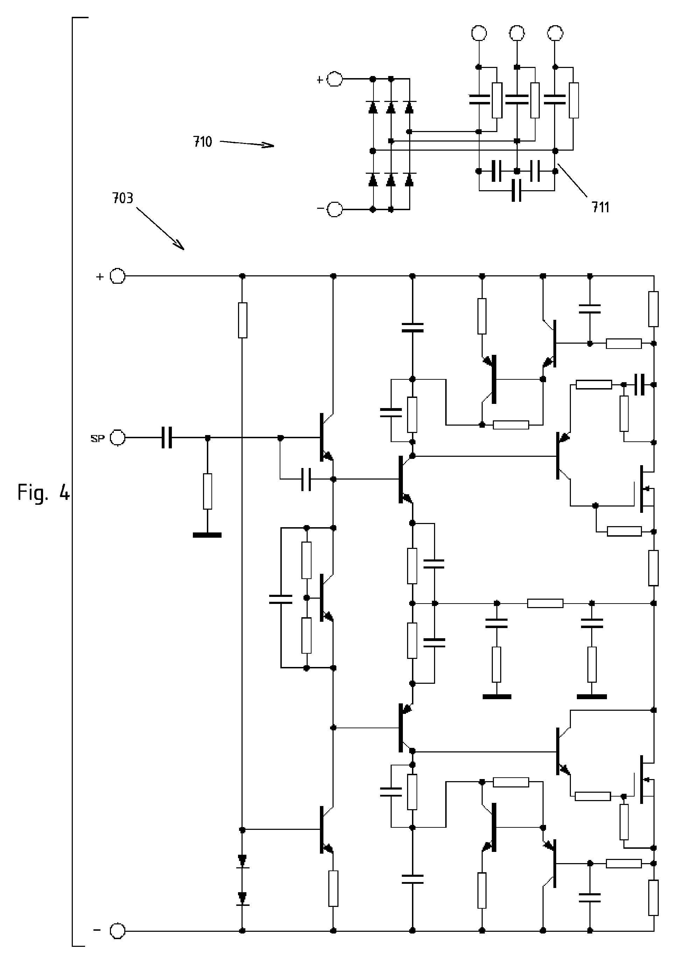

Figure 4 showsan example of realization of the power supply 710 and of the active module 703. The power supply 710 comprisesa voltage divider 711 which servesto reduce the line voltage to a level suitable for the active elements and which will also reduce power loss. The divider 711 will also supply only a limited amount of power, so that in the event of a very large noise signal appearing, the voltage will collapse and thus the circuit will be protected from power overload. The voltage divider is advantageously made of capacitive elements for acting mainly on the higher frequency voltage components, for reducing the power losses, and for attenuating high frequency symmetric noise voltages. Other typesof voltage dividers, including voltage dividers made of resistors, transformers or of other passive or active components, are possible.

The active module 703, which ishasthe same layout as the active module 702, comprise a power MOSFET output stage. Other dispositions are however possible. The active module may comprise, for example a BJT output stage or a power operational amplifier.

The active modules702 and 703 are transconductance amplifiers, with an output current dependent from the input voltage at the input point SP. The transfer function of the active modules702 and 703 isso chosen that very little current isdrawn at DCor at mainsfrequency, while the shunt module presentsa low impedance in the frequency range where noise attenuation isdesired, typically between 130 kHz and 1 MHz.

Optimally the impedance in the attenuation range is real, in order to dissipate rapidly the energy of the noise component, without unwanted oscillations. Typically impedancesof 1 ohm or less are obtained.

Due to the very low impedance in the active filter, the impedances L1, L2 can be much lower than in a passive filter of equivalent performances, and these coils can be kept simple and small. The active modules702 and 703 also induce a much lower leakage current than a conventional capacitor bank.

With reference to figure 2, according to a variant of the invention the active modules702 and 703 and the power supply have been replaced by a further capacitor bank 730. Thisvariant of the invention only includes passive elements and could be advantageouswhere a higher leakage current istolerated.

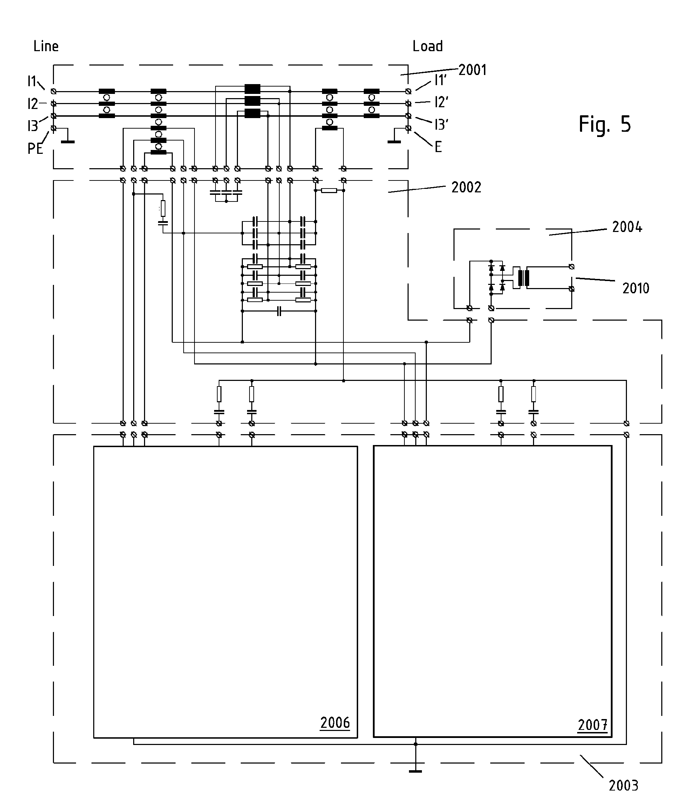

According to another aspect of the invention, represented in figure 5, the filter is realized in a modular fashion, comprising a choke module 2001, a capacitor module, 2002, an amplifier module 2003 and a power supply module 2004. The capacitor module 2002 and the amplifier module 2003 correspond to the active shunt module of the previous embodiments.

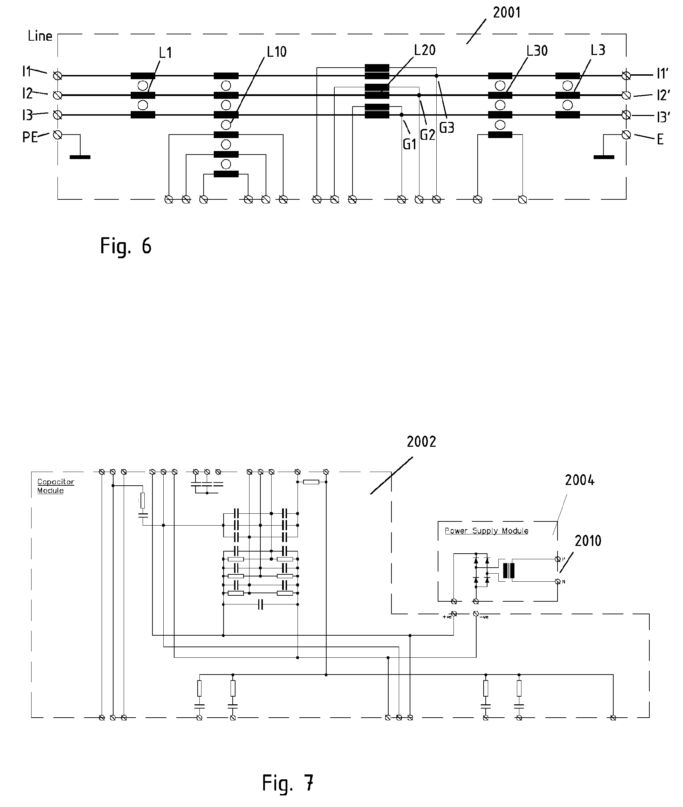

With reference to the figure 6, the choke module 2001 comprises a first and a second inductive elements L1, L3, analogically to the previous embodiments, placed in seriesalong the power lines l1, l2, l3, l1', l2', l3'. In addition to that, the choke module 2001 also comprises additional inductive elements, L10, L20, L30, whose function isto inductively couple the power lines and the shunt circuit, constituted the capacitor module 2002 and by the amplifier module 2003.

In the example of figures2 and 3, the inductive element L10 and L30 are arranged for maximal transfer of a common mode signal from the power linesto the shunt circuit, whereasinductive element L2 does the same for differential mode signals. Other disposition are however possible and comprised in the scope of the present invention.

Asbefore, the inductively coupled shunt of the invention requiresonly one galvanic connection point G1, G2, G3 for each phase of the power cable. Thisallowsfor a simpler and more reliable realization, particularly in the case of multi-stage filters, like the filter presented in this example. Advantageously the choke module 2001 can adopt solid conductorsor insulated cables of adequate gauge for the phases l1, l2, l3.

Figure 7 showsa capacitor module adapted for coupling with the choke module of figure 6. The capacitor module includes the necessary coupling capacitors for transferring the noise signal to the amplifier module, aswell asa bank of capacitor in star configuration for the attenuation of the differential mode noise. The capacitor module comprises, in thisvariant, a power supply module 2004 comprising a transformer whose output 2010 is available for the supply of the amplifier modulesor of other circuits.

Preferably the capacitor module is realized on a PCB (Printed Circuit Board) for a simple and economical assembly by conventional soldering techniques. It should be noted that the capacitor module does not have to handle the rated currents at mainsfrequency. The connection between the choke module 2001 and the capacitor module can be realized by soldering, crimping, or by an electric connector of adequate voltage and current capability. Given the relatively low level of current involved, this connection poses little reliability concerns.

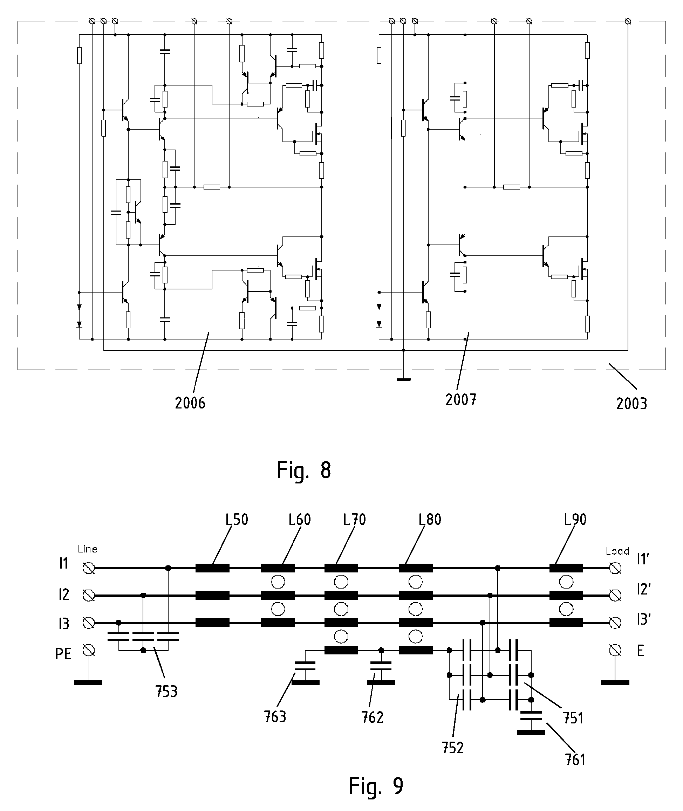

Figure 8 displaysan amplifier module 2003 adapted for coupling with the capacitor module of figure 7. The amplifier module 2003 comprisestwo amplifiers, 2002 and 2007, of similar construction, for dissipation of the common mode noise component. These amplifiers are preferably realized ashybrid circuits with SMD componentson an Alumina or ceramicsubstrate. The connection between the amplifier module and the capacitor module is done by a conventional electrical connector, or by other appropriate connection means.

Figure 9 shows another embodiment of the present invention having three-stages of common noise rejection LC cells. According to this embodiment of the invention, the first stage is provided by inductor L90 and capacitor 761 connected to the star point created by the capacitor bank 751; the second stage is provided by capacitor 763 which, due to the inductive coupling of inductor L80, is virtually connected between inductors L80 and L70; the third common mode attenuation stage is provided by capacitor 763 which is connected to a virtual shunt node between inductors L60 and L70. By the use of virtual shunt nodes, the power cables are tapped only at one position and the number of X capacitors is reduced.

Attenuation of differential-mode noise is obtained in thiscase conventionally via the single stage provided by capacitor bank 753 and the additional inductors L50. This DM stage does not make use of virtual shunt nodes.

It isto be noted that the second and third-stage of CM attenuation are connected to a separate star point, provided by the X capacitor bank 752. This disposition provides better attenuation and requires smaller individual capacitors than if the second and third stage were connected to the same star point as the first stage.

## Claims

1. EMC filter, for connection between a supply network and an electric operated appliance to reduce conduction noise between said supply network and said appliance, comprising one or more one or more shunt modu les (720, 730, 702, 703), connected to virtual shunt nodes (H1-H6), each virtual shunt node being inductively associated to a node of the conductorslines(l1, l2, l3) of the supply network.

2. EMCfilter according to the preceding claim where the virtual shunt nodes are provided by secondary windingsof inductive devices (L10, L20) comprises, inductively coupled to the conductor lines (l1, l2, l3) of the supply network.

3. EMC filter according to one of the preceding claims comprising one or more shunt modules (720, 730, 702, 703), connected to the virtual shunt nodes (H1-H6).

4. EMC filter according to the preceding claim wherein the shunt modules (720, 730) comprise passive elements for absorbing a noise current transmitted between said supply network and said appliance.

5. EMC filter according to claim 3 wherein at least some shunt modules (703) are active modules and comprise an electronic active circuit for absorbing a noise current transmitted between said supply network and said appliance.

6. EMCfilter according to the preceding claim wherein the active shunt modules(703) comprise a power supply circuit (710) connected to said supply network.

7. EMC filter according to the preceding claim, wherein said voltage reducing circuit comprisesa voltage divider.

8. EMC filter according to the preceding claim, wherein said voltage divider is made up of capacitors.

9. EMC filter according to claim 6, wherein said power supply circuit comprises a bridge of diodes.

10. EMC filter according to claim 6, wherein said rectifier comprises an AC-DC converter.

11. EMC filter according to the preceding claims, wherein said active circuit comprises an integrated operational amplifier.

12. EMC filter according to the preceding claim, wherein said operational amplifier is a MOSFET amplifier.

13. EMC filter according to claim 2, in which said inductive device (L10, L20) comprises a common magnetic circuit coupled to all phasesof the power line, for coupling a common mode noise current.

14. EMC filter according to claim 2, in which said inductive device (L10, L20) comprises independent magnetic circuitsindividually coupled to the conductor lines of the supply network, for coupling a differential mode noise current.

15. EMC filter according to one of the preceding claims, comprising at least one inductive device (L10, L20) connected to the conductor lines of the supply network in a manner to provide a multi-stage filter response, in which each conductor line (l1, l2, l3) hasone single galvanic connection (G1, G2, G3) to the shunt module.

16. EMC filter according to one of the preceding claims, comprising a choke module (2001), a capacitor module (2002) connectable to the choke module (2001) and an amplifier module (2003) connect able to the capacitor module.
